# EUROPÄISCHE PATENTSCHRIFT

(11) **EP 3 705 636 B1**
(45) Veröffentlichungstag und Bekanntmachung des Hinweises auf die Patenterteilung: **08.12.2021**
(21) Anmeldenummer: 20161136.5
(22) Anmeldetag: 05.03.2020
(51) Int. Cl.: E03C 1/02, F16K 27/06, F16K 31/04, E03C 1/05

(54) **WANDMONTIERBARE SANITÄRE LEITUNGSANSCHLUSSVORRICHTUNG MIT INTEGRIERTEM VENTIL**
WALL MOUNTABLE SANITARY PLUMBING DEVICE WITH INTEGRAL VALVE
DISPOSITIF DE RACCORDEMENT DE CONDUITE SANITAIRE À SOUPAPE INTÉGRÉE

(30) Priorität: 08.03.2019 DE 102019203218
(43) Veröffentlichungstag der Anmeldung: 09.09.2020
(73) Patentinhaber: Hansgrohe SE, 77761 Schiltach (DE)
(72) Erfinder: HAHN, Arno, 77761 Schiltach (DE); MEIER, Fridolin, 77709 Oberwolfach (DE); WERNER, Bernd, 78727 Oberndorf-Beffendorf (DE)
(74) Vertreter: Patentanwälte Ruff, Wilhelm, Beier, Dauster & Partner mbB

(56) Entgegenhaltungen:
- DE-A1- 19 622 368
- DE-A1-102004 054 642
- US-A1- 2013 312 856

## Beschreibung

Die Erfindung bezieht sich auf eine wandmontierbare sanitäre Leitungsanschlussvorrichtung mit einem wandmontierbaren Grundkörper und einem an dem Grundkörper festlegbaren Ventil.

Leitungsanschlussvorrichtungen dieser Art dienen in der Sanitärtechnik insbesondere als Schnittstelle zwischen gebäudeseitigen Wasserversorgungsinstallationen einerseits und Endverbrauchereinrichtungen, wie Duschbrausen und sanitäre Auslaufhähne bzw. Auslaufarmaturen an Waschtischen, Badewannen, Küchenspülen und dgl., andererseits. Sie sind sowohl in Ausführungen vom Aufputztyp als auch in Ausführungen vom Unterputztyp z.B. als sogenannte Aufputz- bzw. Unterputz-Einbaukästen gebräuchlich, neben dem vorliegend betrachteten Typ mit integriertem Ventil alternativ in Ausführungen ohne Ventil. Oftmals werden solche Leitungsanschlussvorrichtungen auch als sogenannte Wassersteckdosen eingesetzt. Unter wandmontierbar ist vorliegend zu verstehen, dass die sanitäre Leitungsanschlussvorrichtung dafür bestimmt und eingerichtet ist, an einer gebäudeseitigen Wand montiert werden zu können, speziell an einem Wandbereich, in dem ein gebäudeseitiger Wasserinstallationsanschlusspunkt vorliegt. Mit dem Begriff Wand ist hierbei vorliegend allgemein eine für die Montage der Leitungsanschlussvorrichtung geeignete gebäudeseitige Fläche zu verstehen, bei der es sich sowohl um eine eigentliche vertikale Wandfläche eines Gebäudes als auch um eine Deckenfläche oder Bodenfläche handeln kann.

Stellvertretend seien zum Stand der Technik, primär bezüglich Unterputz-Ausführungen, die Offenlegungsschriften DE 10 2016214 777 A1, DE10 2017 100 707 A1, US 2011/0290356 A1, DE 10 2004 060 744 A1, DE 197 02 356 A1, DE 10 2004 054 642 A1, DE 196 22 368 A1, DE 196 27 571 A1, US 2009/0057591 A1, EP 0 844 340 A1 und DE 39 07 586 A1 sowie die Patentschriften EP 2 889 522 B1, US 9.650.768 B2 und US 10.138.619.B2 genannt.

Die Offenlegungsschrift US 2013/0312856 A1 offenbart ein über einen Handgriff handgesteuertes Ventil mit einer Elektronik, die eine Steuerungseinheit, eine mit dieser elektrisch über ein Kabel verbundene Sensorik und eine optische Anzeigeeinheit umfasst und zur Temperaturüberwachung dient.

Der Erfindung liegt als technisches Problem die Bereitstellung einer wandmontierbaren sanitären Leitungsanschlussvorrichtung der eingangs genannten Art zugrunde, die gegenüber dem oben erwähnten Stand der Technik Verbesserungen hinsichtlich Flexibilität in der Anwendung, kompakter Bauform, Fertigungsaufwand und/oder Einsatzmöglichkeiten in modernen Sanitärsystemen einschließlich Systemen mit Wassersteckdosen und Systemen für sanitäre Smart-Home-Anwendungen bietet.

Die Erfindung löst dieses Problem durch die Bereitstellung einer wandmontierbaren sanitären Leitungsanschlussvorrichtung mit den Merkmalen des Anspruchs 1. Diese Leitungsanschlussvorrichtung beinhaltet einen wandmontierbaren Grundkörper, der eine Aufnahmehülse und einen Wassereinlasskanal aufweist, der mit einer Einlasskanalausmündung umfangsseitig in die Aufnahmehülse mündet. Weiter beinhaltet die Leitungsanschlussvorrichtung ein elektrisch ansteuerbares Ventil mit einer axial in die Aufnahmehülse einfügbaren, zylindrischen Ventilkartusche. In der Ventilkartusche befindet sich eine Ventileinheit, und die Ventilkartusche weist an einer ersten Stirnseite eine elektrische Ventilanschlusseinheit und an einer zweiten Stirnseite eine Rohrleitungsanschlusskupplung auf. Des Weiteren beinhaltet die Ventilkartusche eine umfangsseitige, fluiddicht an die Einlasskanalausmündung des Wassereinlasskanals koppelbare Ventileinlassöffnung. Die Leitungsanschlussvorrichtung umfasst eine Festlegungseinheit, mit der die Ventilkartusche fixiert in der Aufnahmehülse festlegbar ist.

Durch diesen Aufbau ist die Leitungsanschlussvorrichtung flexibel für verschiedene Anwendungen einsetzbar, gerade auch in modernen Sanitäreinrichtungen vom Smart-Home-Typ oder in Sanitärsystemen mit Wassersteckdosen. Durch die Verwendung des elektrisch ansteuerbaren Ventils kann die Wasserführung in der Leitungsanschlussvorrichtung elektrisch gesteuert werden, was insbesondere eine Fernsteuerung der Wasserführung ermöglicht, so dass eine direkte Zugänglichkeit der Leitungsanschlussvorrichtung zum Betätigen des Ventils nicht zwingend erforderlich ist. Bei dem Ventil kann es sich insbesondere um ein Absperrventil handeln, alternativ um ein Ventil anderen Typs, wie ein Mischventil oder Umstellventil, wozu das Ventil dann entsprechend eine oder mehrere zusätzliche Ventileinlassöffnungen und/oder Ventilauslassöffnungen besitzen kann.

Durch die Verwendung eines Ventils mit in die Aufnahmehülse des Grundkörpers einfügbarer, zylindrischer Ventilkartusche kann die Leitungsanschlussvorrichtung bei Bedarf flexibel mit einem jeweils gewünschten Ventil bestückt werden, das dann mit seiner Ventilkartusche in die Aufnahmehülse eingefügt wird. Die Festlegungseinheit sorgt für eine fixierte Festlegung der Ventilkartusche in der Aufnahmehülse und damit bei Bedarf für eine gewünschte mechanische Festigkeit der Verbindung von Ventil und Grundkörper.

Vorteilhaft ist des Weiteren die Realisierung der Ventilkartusche mit der elektrischen Ventilanschlusseinheit an der einen Stirnseite und der Rohrleitungsanschlusskupplung an der anderen Stirnseite sowie mit der umfangsseitig gebildeten Ventileinlassöffnung. Die Rohrleitungsanschlusskupplung an der zweiten Stirnseite der Ventilkartusche bildet hierbei eine Auslassöffnung des Ventils, an die in gewünschter Weise eine insbesondere zu einem sanitären Endverbraucher, wie eine Duschbrause oder eine Wasserauslaufarmatur z.B. in Form üblicher Mischerarmaturen oder Auslaufhähnen, führende Rohrleitung ankoppelbar ist. Unter der Bezeichnung Rohrleitung sind hierbei vorliegend sowohl starre wasserführende Rohrleitungen als auch flexible wasserführende Schlauchleitungen zu verstehen, z.B. ein starrer Rohranschlussstutzen, der zu einem Brausekörper bzw. Brausekopf führt, oder ein zu einem Brausekopf führender, flexibler Brauseschlauch. Bei Bedarf kann die fixierte Festlegung der Ventilkartusche in der Aufnahmehülse durch die Festlegungseinheit mit einer ausreichend hohen mechanischen Belastungsfähigkeit ausgeführt sein, wie sie für eine direkte Ankopplung eines mit einem Anschlussstutzen versehenen Brausekopfs bzw. Brausearms benötigt wird, beispielsweise für eine deckenmontierte Kopfbrause oder eine wandmontierte Kopf- oder Seitenbrause in einem Duschraum.

In einer Weiterbildung der Erfindung weist die Festlegungseinheit eine Bajonettverbindungseinheit mit einem an der Ventilkartusche umfangsseitig radial abstehenden Bajonettverbindungsflansch und einer vom Bajonettverbindungsflansch der Ventilkartusche hintergreifbaren Bajonettverbindungsschulter an der Aufnahmehülse auf. Dies stellt eine sehr vorteilhafte Realisierung der Festlegungseinheit dar. Die Ventilkartusche kann hierdurch nach axialem Einschieben in die Aufnahmehülse durch eine Bajonettdrehbewegung in der Aufnahmehülse sicher festgelegt werden. Da die Bajonettverbindung grundsätzlich lösbar ist, kann die Ventilkartusche bei Bedarf wieder aus der Aufnahmehülse herausgenommen werden, z.B. zwecks Reinigung oder Austausch durch eine andere Ventilkartusche.

In einer Ausgestaltung der Erfindung weist die Festlegungseinheit eine Bajonettverriegelung für die Bajonettverbindungseinheit auf. Die Bajonettverriegelung beinhaltet je eine axiale Teilumfangsbohrung am Innenumfang der Aufnahmehülse und am Außenumfang der Ventilkartusche sowie einen Drehsicherungsbolzen. Unter axialer Teilumfangsbohrung ist hierbei zu verstehen, dass diese umfangsseitig nur einen Teil einer vollständigen, sich axial erstreckenden Bohrung bildet, d.h. sich mit ihrem Bohrungsrand über weniger als 360° erstreckt. Die beiden Teilumfangsbohrungen sind aufeinander abgestimmt so ausgeführt, dass sie nur in einer Festlegeposition der Bajonettverbindungseinheit, in der die Bajonettverbindungseinheit die Ventilkartusche in der Aufnahmehülse fixiert festlegt, zur Bildung einer Vollbohrung, d.h. einer in Umfangsrichtung vollständigen Bohrung, fluchten, in die der Drehsicherungsbolzen einfügbar ist. Somit ist bei eingefügtem Drehsicherungsbolzen die Ventilkartusche in ihrer Bajonettverbindungs-Drehlage gegen unbeabsichtigtes Zurückdrehen in Bajonettlöserichtung gesichert bzw. verriegelt.

In einer Ausgestaltung der Erfindung weist die Ventilkartusche einen die Ventileinlassöffnung ringförmig umgebenden Dichtring auf, der sich in Kartuschenumfangsrichtung um einen Bajonettdrehwinkelbereich weiter als die Ventileinlassöffnung erstreckt. Dies hat den Vorteil, dass ein Vorbeidrehen des Dichtrings an der Einlasskanalausmündung des Wassereinlasskanals während der Bajonettdrehbewegung vermieden wird, was jeglicher Gefahr vorbeugt, dass der Dichtring an einer scharfen Randkante der Einlasskanalausmündung des Wassereinlasskanals verletzt bzw. beschädigt werden könnte. Der Dichtring umgibt den Mündungsbereich der Einlasskanalausmündung während der gesamten Bajonettdrehbewegung vollständig, ohne deren Mündungsrand zu durchfahren bzw. diesen zu kreuzen.

In einer Weiterbildung der Erfindung weist die Aufnahmehülse eine umfangsseitig über einen Freiwinkel hinweg offene Hülsenform auf, und die Ventilkartusche beinhaltet umfangsseitig einen sich über einen dem Freiwinkel entsprechenden Umfangswinkel erstreckenden, radial abkragenden Ausrichtflansch, der bei axial vollständig eingefügter Ventilkartusche axial außerhalb der Aufnahmehülse, d.h. hinter selbiger, zu liegen kommt, d.h. axial über diese hinaus gelangt ist. Damit wird eine in Drehrichtung ausgerichtete Positionierung für die in die Aufnahmehülse einzufügende Ventilkartusche erreicht. Die Ventilkartusche kann nur in derjenigen Drehstellung axial in die Aufnahmehülse eingeschoben werden, in welcher sich der Ausrichtflansch der Ventilkartusche im von der offenen Hülsenform freigelassenen Umfangsabschnitt der Aufnahmehülse befindet. Erst wenn die Ventilkartusche vollständig axial in die Aufnahmehülse eingeschoben ist, ist der Ausrichtflansch der Ventilkartusche axial über die Aufnahmehülse hinaus gelangt, so dass die Ventilkartusche gedreht werden kann, beispielsweise um die erwähnte Bajonettdrehbewegung zu ermöglichen, wenn die Festlegungseinheit die Bajonettverbindungseinheit aufweist.

In einer Weiterbildung der Erfindung beinhalten die Aufnahmehülse am Innenumfang und die Ventilkartusche am Außenumfang korrespondierende, sich in Kartuscheneinfügerichtung verengende Konusflächen. Dies trägt zu einer punktgenauen axialen Festlegung der Ventilkartusche in der Aufnahmehülse und zu einer hohen mechanischen Festigkeit der Festlegung der Ventilkartusche in der Aufnahmehülse bei. Zudem lässt sich mit diesen Konusflächen in der Realisierung mit dem die Ventileinlassöffnung ringförmig umgebenden Dichtring erreichen, dass sich der Dichtring beim axialen Einschieben der Ventilkartusche in die Aufnahmehülse mit seinem axial vorderen Ringabschnitt an der Randkante der Einlasskanalausmündung des Wassereinlasskanals axial vorbeibewegen kann, ohne bereits gegen diese anzuliegen, so dass wiederum jegliche Gefahr einer Beschädigung des Dichtrings durch die Randkante der Einlasskanalausmündung des Wassereinlasskanals vermieden wird. Dazu erstrecken sich die Konusflächen dann mindestens auch im Bereich des Dichtrings bzw. der Einlasskanalausmündung des Wassereinlasskanals.

In einer Weiterbildung der Erfindung weist die Ventilkartusche an ihrer zweiten Stirnseite eine Drehwerkzeugaufnahme auf, d.h. eine Aufnahme für ein Werkzeug, mit dem die Ventilkartusche gedreht werden kann. Dies ist beispielsweise für die Realisierung vorteilhaft, bei der Festlegungseinheit die Bajonettverbindungseinheit aufweist. In diesem Fall kann mit dem besagten Werkzeug die Ventilkartusche nach axialem Einschieben in die Aufnahmehülse zur Bewirkung der Bajonettdrehbewegung gedreht und damit sicher und mit hoher Festigkeit in der Aufnahmehülse festgelegt werden. An ihrer zweiten Stirnseite ist die Ventilkartusche für das Werkzeug leicht zugänglich, da dies diejenige Stirnseite der Ventilkartusche darstellt, an der sich deren Rohrleitungsanschlusskupplung befindet, so dass für eine problemlose Zugänglichkeit dieser Stirnseite der Ventilkartusche schon wegen des Anschlusszweckes dieser Rohrleitungsanschlusskupplung gesorgt ist.

In einer Weiterbildung der Erfindung weist die Ventilkartusche am Außenumfang eine axiale Kabelführung zum Führen mindestens eines elektrischen Anschlusskabels von der ersten zur zweiten Stirnseite auf. Damit kann ein typischerweise von der elektrischen Ventilanschlusseinheit an der ersten Stirnseite abgehendes elektrisches Anschlusskabel zur zweiten Stirnseite geführt werden, was besonders in Fällen vorteilhaft ist, in denen die zweite Stirnseite der Ventilkartusche leichter zugänglich ist als die erste Stirnseite, wenn die Ventilkartusche in der Aufnahmehülse des Grundkörpers festgelegt ist. Die erste Stirnseite der Ventilkartusche braucht in diesem Fall nicht unbedingt zugänglich bleiben.

In einer Weiterbildung der Erfindung weist der Grundkörper eine wandmontierbare Grundplatte und einen an der Grundplatte befestigten Sockelkörper auf, der die Aufnahmehülse, einen Wassereinlass und den vom Wassereinlass zur Einlasskanalausmündung führenden Wassereinlasskanal umfasst. Dies stellt eine fertigungstechnisch und montagetechnisch vorteilhafte, mehrteilige Realisierung des Grundkörpers dar. Über die Grundplatte kann der Grundkörper an einer gewünschten Wandfläche montiert werden, und der Sockelkörper kann seinerseits an der Grundplatte z.B. lösbar befestigt werden, wobei am Sockelkörper die Aufnahmehülse, der Wassereinlass und der Wassereinlasskanal vorgefertigt sind.

In einer Weiterbildung der Erfindung ist der Wassereinlasskanal mit einer Längsrichtung seines Wassereinlasses senkrecht zu einer Längsrichtung der Aufnahmehülse orientiert. Dies ist beispielsweise für Leitungsanschlussvorrichtungen günstig, bei denen ein gebäudeseitiger Wasserinstallationsanschluss mit einem mit seiner Längsachse wandparallel orientierten Endanschlussstutzen abschließt und an die Leitungsanschlussvorrichtung, d.h. spezieller an die Rohrleitungsanschlusskupplung der Ventilkartusche, eine senkrecht zur Wandfläche abgehende Rohrleitung angeschlossen werden soll. Außerdem lässt sich bei dieser Ausführung der Grundkörper mit vergleichsweise geringer Einbautiefe, d.h. geringer Ausdehnung in Richtung Wandtiefe senkrecht zur Wandfläche, realisieren.

In einer Weiterbildung der Erfindung weist der Grundkörper eine Leerrohraufnahme für ein Leerrohr auf, das zur Aufnahme einer elektrischen Leitung genutzt werden kann. Dies ermöglicht eine einfache elektrische Kabelzuführung für das elektrisch ansteuerbare Ventil.

In einer Weiterbildung der Erfindung bildet der Grundkörper eine Anschlussbox mit einem Boxgehäusedeckel. Der Boxgehäusedeckel schützt den Innenraum des Grundkörpers einschließlich des Ventils und kann auch als optische Abdeckung fungieren. Die Anschlussbox eignet sich insbesondere als Unterputz-Einbaukasten für Unterputz-Realisierungen der Leitungsanschlussvorrichtung.

Vorteilhafte Ausführungsformen der Erfindung sind in den Zeichnungen dargestellt. Diese und weitere Ausführungsformen der Erfindung werden nachfolgend näher beschrieben. Hierbei zeigen:
- Fig. 1: eine Draufsicht auf eine wandmontierbare sanitäre Leitungsanschlussvorrichtung,
- Fig. 2: eine Schnittansicht längs einer Linie II-II in Fig. 1,
- Fig. 3: eine Schnittansicht längs einer Linie III-III in Fig. 2,
- Fig. 4: eine Perspektivansicht der Leitungsanschlussvorrichtung der Fig. 1 bis 3 mit abgenommenem Gehäusedeckel in einer Ventileinbausituation vor einer Bajonettdrehung einer in eine Aufnahmehülse eingeschobenen Ventilkartusche,
- Fig. 5: eine Perspektivansicht analog Fig. 4 in einer Einbausituation mit fertig fixierter Ventilkartusche,
- Fig. 6: eine Seitenansicht einer Grundplatte und eines Sockelkörpers eines Grundkörpers der Leitungsanschlussvorrichtung der Fig. 1 bis 5 mit fertig montierter Ventilkartusche,

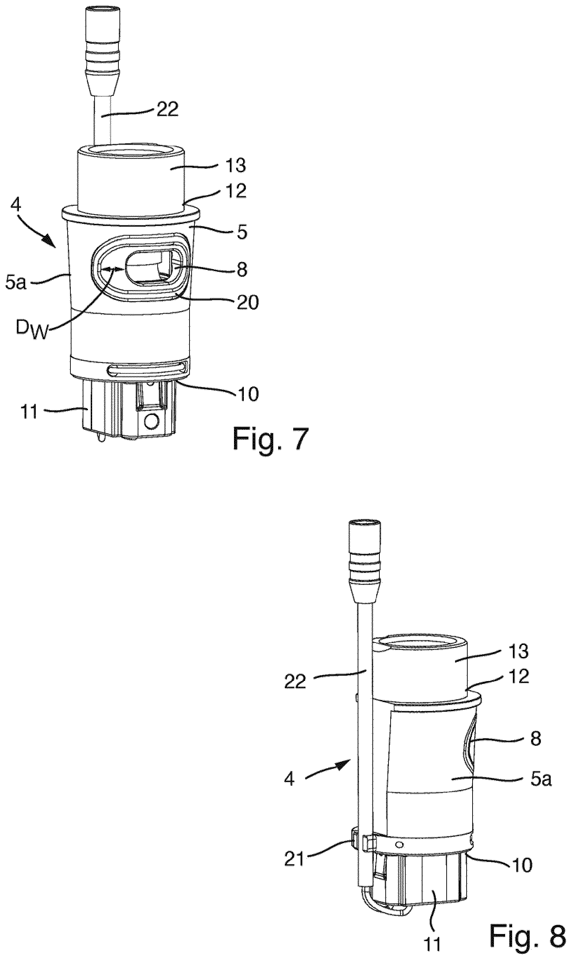

- Fig. 7: eine perspektivische Seitenansicht der Ventilkartusche im Bereich ihrer Ventileinlassöffnung,
- Fig. 8: eine gegenüber Fig. 7 gedrehte, perspektivische Seitenansicht der Ventilkartusche,
- Fig. 9: eine perspektivische Draufsicht von oben auf die Ventilkartusche,
- Fig. 10: eine Draufsicht auf die Leitungsanschlussvorrichtung ohne Gehäusedeckel und Grundplatte in der Einbausituation vor Bajonettdrehung,
- Fig. 11: eine Schnittansicht längs einer Linie XI-XI in Fig. 10 und
- Fig. 12: eine Schnittansicht längs einer Linie XII-XII in Fig. 11.

Die in den Figuren veranschaulichte, wandmontierbare sanitäre Leitungsanschlussvorrichtung umfasst einen wandmontierbaren Grundkörper 1, der eine Aufnahmehülse 2 und einen Wassereinlasskanal 3 aufweist, sowie ein elektrisch ansteuerbares Ventil 4 mit einer axial in die Aufnahmehülse 2 einfügbaren, zylindrischen Ventilkartusche 5 und eine Festlegungseinheit 6 zur fixierten Festlegung der Ventilkartusche 5 in der Aufnahmehülse 2. Zur Wandmontage weist der Grundkörper 1 geeignete Befestigungsmittel auf. Im gezeigten Beispiel sind dies Befestigungsschrauben 15, alternativ dienen hierfür andere herkömmliche Wandbefestigungsmittel, was hier keiner näheren Erläuterungen bedarf.

Der Wassereinlasskanal 3 mündet mit einer Einlasskanalausmündung 7 umfangsseitig in die Aufnahmehülse 2. Die Ventilkartusche 5 beinhaltet umfangsseitig, d.h. an ihrer umfangsseitigen Zylindermantelfläche, eine Ventileinlassöffnung 8, die fluiddicht an die Einlasskanalausmündung 7 des Wassereinlasskanals 3 koppelbar ist. Diese fluiddichte Kopplung ist bewirkt, wenn die Ventilkartusche 5 mittels der Festlegungseinheit 6 in der Aufnahmehülse 2 fixiert festgelegt ist, d.h. wenn sich die Ventilkartusche 5 in ihrer Gebrauchsposition in der Aufnahmehülse 2 befindet.

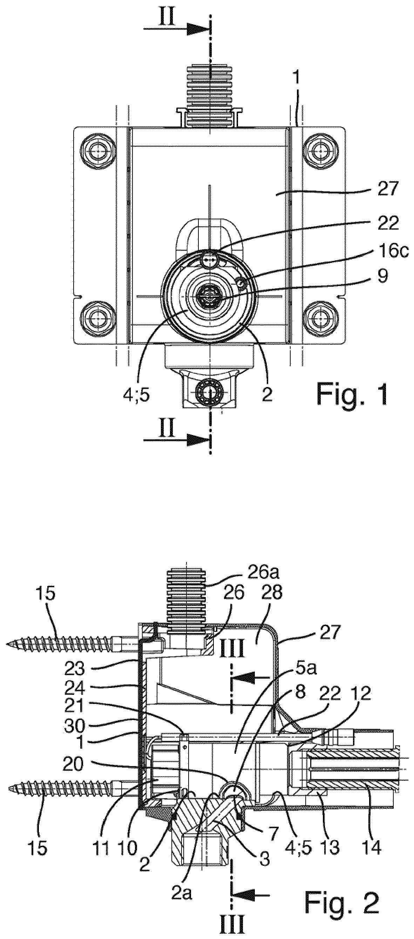

In der Ventilkartusche 5 befindet sich eine Ventileinheit 9, z.B. von einem herkömmlichen, elektrisch gesteuerten Magnet- und/oder Membranventiltyp oder einem beliebigen anderen herkömmlichen, elektrisch gesteuerten Ventiltyp je nach Bedarf und Anwendungsfall, was hier keiner weiteren Erläuterungen bedarf. An einer ersten Stirnseite 10 weist die Ventilkartusche 5 eine elektrische Ventilanschlusseinheit 11 auf. An einer zweiten Stirnseite 12 weist die Ventilkartusche 5 eine Rohrleitungsanschlusskupplung 13 auf. Die Rohrleitungsanschlusskupplung 13 bildet folglich einen axialen Ventilauslass des Ventils 4 an der zweiten Stirnseite 12 und kann beispielsweise durch ein Anschlussinnengewinde realisiert sein, in das eine anzuschließende Rohrleitung 14, wie in Fig. 2 gezeigt, eingeschraubt werden kann, vorzugsweise mit standardisierten Anschlussmaßen wie Gewindekupplungen mit ½-Zoll-Maß oder ¾-Zoll-Maß. Alternativ sind ein Anschlussaußengewinde oder andere Anschlusskupplungstypen für die Rohrleitungsanschlusskupplung 13 verwendbar, wie eine Bajonettanschlusskupplung oder eine Steckanschlusskupplung. Das Ventil ist vorzugsweise als Absperrventil ausgeführt, alternativ ist es von einem anderen Ventiltyp, z.B. ein Umstellventil oder Mischventil mit geeignet weiteren Ventileinlässen und/oder Ventilauslässen.

Zur Montage wird das Ventil 4 mit seiner Ventilkartusche 5 axial mit seiner ersten Stirnseite 10 voraus in die Aufnahmehülse 2 des Grundkörpers 1 eingeschoben und dann mit der Festlegungseinheit 6 in der Aufnahmehülse 2 fixiert festgelegt. In entsprechenden Ausführungsformen weist die Festlegungseinheit 6 hierfür wie im gezeigten Beispiel eine Bajonettverbindungseinheit mit einem an der Ventilkartusche 5 umfangsseitig radial abstehenden Bajonettverbindungsflansch 6a und einer vom Bajonettverbindungsflansch 6a hintergreifbaren Bajonettverbindungsschulter 6b an der Aufnahmehülse 2 auf.

In dieser vorteilhaften Realisierung wird dementsprechend die Ventilkartusche 5 nach axialem Einschieben in die Aufnahmehülse 2 mittels einer üblichen Bajonettdrehbewegung in der Aufnahmehülse 2 fixiert festgehalten. Indem der Bajonettverbindungsflansch 6a der Ventilkartusche 5 in dieser Festlegeposition der Bajonettverbindungseinheit die Bajonettverbindungsschulter 6b der Aufnahmehülse 2 hintergreift, ist die Ventilkartusche 5 insbesondere gegen axiales Herausgelangen aus der Aufnahmehülse 2 gesichert festgelegt. In alternativen Ausführungen ist die Festlegungseinheit 6 von einem anderen herkömmlichen Verbindungstyp, z.B. unter Verwendung einer Schraubverbindung oder einer Schnappverbindung.

In einer vorteilhaften Ausführung weist der Bajonettverbindungsflansch 6a und/oder die Bajonettverbindungsschulter 6b eine Anlaufschräge auf, im gezeigten Beispiel der Bajonettverbindungsflansch 6a, wodurch die Ventilkartusche 5 mittels der Bajonettdrehbewegung aufgrund von Keilkräfte, die von der Anlaufschräge erzeugt werden, axial in die Festlegeposition in der Aufnahmehülse 2 gedrückt bzw. gezogen werden kann.

In einer vorteilhaften Ausführungsform beinhalten die Aufnahmehülse 2 an ihrem Innenumfang und die Ventilkartusche 5 an ihrem Außenumfang korrespondierende, sich in Kartuscheneinfügerichtung verengende Konusflächen 2a, 5a, vorzugsweise durch entsprechende Kegelstumpfflächen in einem jeweils zugehörigen axialen Abschnitt der Aufnahmehülse 2 bzw. der Ventilkartusche 5, wie im gezeigten Beispiel. Diese Gestaltung lässt sich gut mit der erwähnten Realisierung der Festlegungseinheit 6 als Bajonettverbindungseinheit kombinieren. Durch die Bajonettdrehbewegung kann die Ventilkartusche 5, wie oben erwähnt, zusätzlich axial in Einschubrichtung relativ zur Aufnahmehülse 2 gegen diese angedrückt werden, wodurch die Ventilkartusche 5 mit ihrer außenseitigen Konusfläche 5a gegen die korrespondierende Konusfläche 2a an der Innenseite der Aufnahmehülse 2 zur Anlage kommt. Dies ergibt einen sehr festen, stabilen Halt der Ventilkartusche 5 in der Aufnahmehülse 2.

Optional ist für die Festlegungseinheit 6 in ihrer Realisierung als Bajonettverbindungseinheit eine Anschlagbegrenzung der Bajonettdrehbewegung vorgesehen, z.B. dadurch, dass der Bajonettverbindungsflansch 6a der Ventilkartusche 5 mit einer in Bajonettdrehrichtung vorderen Kante gegen eine korrespondierende Anschlagschulter an der Aufnahmehülse 2 zur Anlage kommt.

In vorteilhaften Ausführungen weist die Festlegungseinheit 6 in ihrer Realisierung als Bajonettverbindungseinheit wie beim gezeigten Beispiel eine Bajonettverriegelung auf, die gegen unbeabsichtigtes Zurückdrehen der Bajonettverdrehung in die Festlegeposition und damit gegen ein unbeabsichtigtes Lösen bzw. Lockern der in der Aufnahmehülse 2 fixiert festgelegten Ventilkartusche 5 sichert. Dazu weist die Bajonettverriegelung eine axiale Teilumfangsbohrung 16a am Innenumfang der Aufnahmehülse 2 und eine korrespondierende axiale Teilumfangsbohrung 16b am Außenumfang der Ventilkartusche 5 sowie einen Drehsicherungsbolzen 16c auf. Die beiden Teilumfangsbohrungen 16a, 16b fluchten nur in der Festlegeposition der Bajonettverbindungseinheit zur Bildung einer Vollbohrung, in die dann der Drehsicherungsbolzen 16c einfügbar ist.

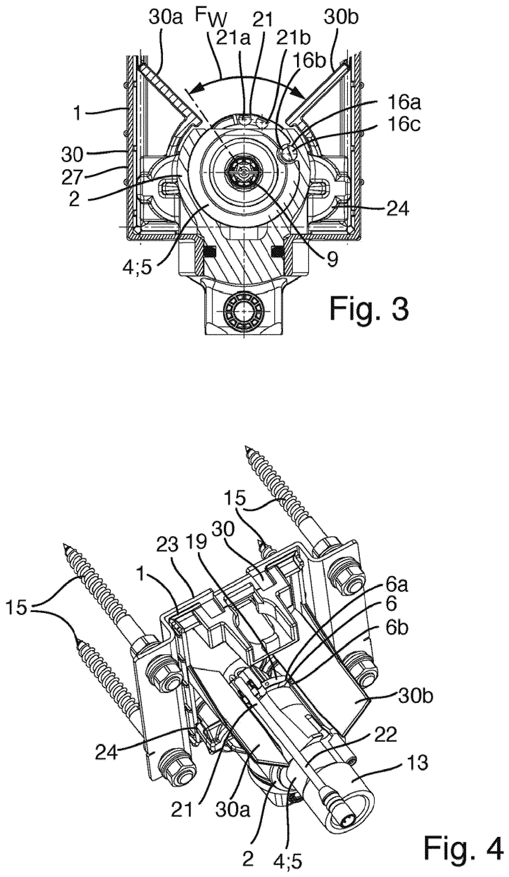

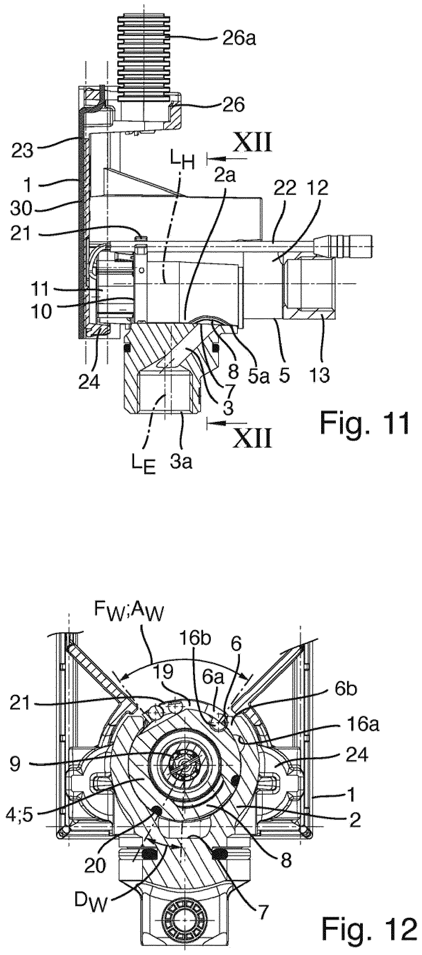

Diese Situation mit fertig in der Aufnahmehülse 2 montierter Ventilkartusche 5 und mittels des eingefügten Drehsicherungsbolzens 16c verriegelter Bajonettverbindung ist beispielsweise in den Fig. 1 bis 3, 5 und 6 dargestellt bzw. ersichtlich, während die Situation mit in die Aufnahmehülse 2 eingeschobener Ventilkartusche 5 vor der abschließenden Bajonettverdrehung in den Fig. 4 und 10 bis 12 illustriert ist. Insbesondere ist aus Fig. 12 zu erkennen, dass in dieser Situation die beiden Teilumfangsbohrungen 16a, 16b noch in Drehrichtung versetzt sind und daher nicht zur Bildung der Vollbohrung fluchten. Erst wenn die Ventilkartusche 5 von dieser Stellung durch die Bajonettdrehbewegung in die endgültige Festlegeposition gedreht wird, fluchten die beiden Teilumfangsbohrungen 16a, 16b und bilden dadurch die Vollbohrung, in die dann der Drehsicherungsbolzen 16c eingefügt werden kann. Wenn der Drehsicherungsbolzen 16c in die Vollbohrung eingefügt ist, verhindert er ein Wegdrehen der Teilumfangsbohrung 16b der Ventilkartusche 5 von der Teilumfangsbohrung 16a der Aufnahmehülse 2 und verriegelt so die Ventilkartusche 5 gegen Zurückdrehen in die Bajonettlöseposition.

In einer vorteilhaften Realisierung sind beide Teilumfangsbohrungen 16a, 16b als Teilumfangsgewinde ausgebildet, die in ihrer fluchtenden Lage ein entsprechendes Vollgewinde bereitstellen, in die der dann dazu passend als Schraubbolzen ausgeführte Drehsicherungsbolzen 16c eingeschraubt werden kann. Beispielsweise können beide Teilumfangsbohrungen 16a, 16b jeweils als ein sich über 180° in Umfangsrichtung erstreckendes Halbumfangsgewinde ausgeführt sein, die sich in fluchtender Lage zum Vollgewinde ergänzen. In einer weiteren vorteilhaften Realisierung ist wie im gezeigten Beispiel eine der beiden Teilumfangsbohrungen 16a, 16b, z.B. wie gezeigt die Teilumfangsbohrung 16b der Ventilkartusche 5, als ein sich über mehr als 180° erstreckendes Teilumfangsgewinde ausgebildet, während die andere Teilumfangsbohrung kein Gewinde besitzt. Auch in diesem Fall ist der Drehsicherungsbolzen 16c passend dazu als Schraubbolzen ausgeführt, der in die Vollbohrung eingeschraubt werden kann, wenn sich die beiden Teilumfangsbohrungen 16a, 16b in ihrer fluchtenden Lage befinden. Dabei wird der Drehsicherungsbolzen 16c im Gewinde der betreffenden Teilumfangsbohrung geführt, die sich zu diesem Zweck mit ihrem Gewinde um etwas mehr als 180° in Umfangsrichtung erstreckt, während die nicht mit dem Gewinde versehene Teilumfangsbohrung lediglich den nötigen restlichen Platz für den Drehsicherungsbolzen 16c bereitstellt und sich entsprechend um etwas weniger als 180° in Umfangsrichtung erstreckt. In dieser Ausführung braucht somit nur eine der beiden Teilumfangsbohrungen 16a, 16b mit einem Gewinde gefertigt werden.

Zum Entnehmen der Ventilkartusche 5 wird zunächst der Drehsicherungsbolzen 16c aus der Vollbohrung herausgenommen, z.B. herausgeschraubt, wonach die Ventilkartusche 5 in die Bajonettlöseposition zurückgedreht und anschließend axial aus der Aufnahmehülse 2 herausgenommen werden kann.

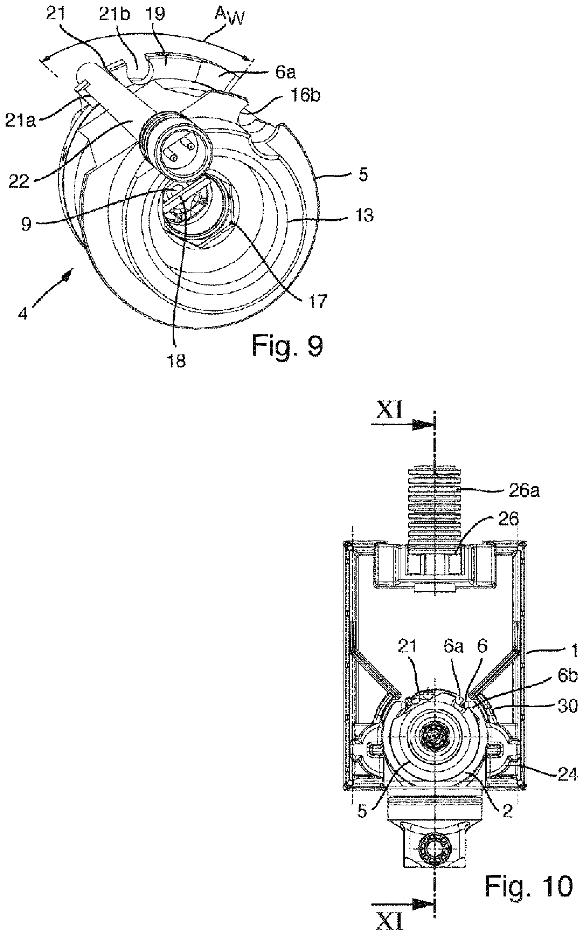

In vorteilhaften Ausführungen weist die Ventilkartusche 5 wie beim gezeigten Beispiel an ihrer zweiten Stirnseite 12 eine Drehwerkzeugaufnahme 17 auf, wie in Fig. 9 zu erkennen. In diese Aufnahme 17 kann ein passendes Werkzeug eingefügt werden, mit dem die Ventilkartusche 5 gedreht werden kann, insbesondere für die Bajonettdrehbewegung zum Verdrehen der Ventilkartusche 5 in ihre endgültige Festlegeposition und zum Zurückdrehen in ihre Bajonettlöseposition. Die Drehwerkzeugaufnahme 17 kann beispielsweise wie gezeigt als eine Mehrkantaufnahme, insbesondere eine Sechskantaufnahme, realisiert sein, alternativ als eine andere herkömmliche Drehwerkzeugaufnahme, z.B. vom Kreuzschlitztyp oder vom einfachen Längsschlitztyp zum Ansetzen eines entsprechenden Schraubendreherwerkzeugs. Optional ist wie im gezeigten Beispiel die innenliegende Ventileinheit 9 gegen ein zu weites axiales Vorbewegen des Werkzeugs durch einen axialen Werkzeuganschlag 18 gesichert, der sich am axial hinteren Ende der Drehwerkzeugaufnahme 17 befindet, wie ebenfalls in Fig. 9 zu erkennen. Der Werkzeuganschlag 18 kann z.B. durch einen einfachen Mittensteg bzw. Quersteg gebildet sein, der die Drehwerkzeugaufnahme 17 an ihrem der Ventileinheit 9 zugewandten, inneren Ende quert.

In entsprechenden Ausführungsformen weist die Aufnahmehülse 2 wie im gezeigten Beispiel eine umfangsseitig über einen Freiwinkel F_{W} hinweg offene Hülsenform auf, d.h. sie erstreckt sich in Umfangsrichtung über einen Umfangswinkel, der um den Freiwinkel F_{W} kleiner als 360° ist, jedoch vorzugsweise größer als 180° ist. Passend dazu beinhaltet die Ventilkartusche 5 umfangsseitig einen sich über einen dem Freiwinkel F_{W} entsprechenden Umfangswinkel A_{W} erstreckenden, radial abkragenden Ausrichtflansch 19, der bei axial vollständig eingefügter Ventilkartusche 5 hinter die Aufnahmehülse 2, d.h. axial über diese hinaus, gelangt, so dass er dann ein Verdrehen der Ventilkartusche 5 in der Aufnahmehülse 2 nicht behindert. Andererseits blockiert der Ausrichtflansch 19 ein Verdrehen der Ventilkartusche 5 in der Aufnahmehülse 2, solange die Ventilkartusche 5 axial nicht vollständig in die Aufnahmehülse 2 eingeschoben ist, und der Ausrichtflansch 19 hat außerdem die Wirkung, dass die Ventilkartusche 5 nur in einer ganz bestimmten Drehstellung relativ zur Aufnahmehülse 2 axial in die Aufnahmehülse 2 eingeschoben werden kann. Dies ist diejenige Drehposition, in welcher der Ausrichtflansch 19 mit dem offenen Umfangsabschnitt der Aufnahmehülse 2 fluchtet, wozu sich der offenen Umfangsabschnitt der Aufnahmehülse 2 über den entsprechenden Winkel, speziell den Freiwinkel F_{W}, in Umfangsrichtung erstreckt wie der Ausrichtflansch 19, der sich über den korrespondierenden Umfangswinkel A_{W} erstreckt. In entsprechenden Ausführungen ist der Bajonettverbindungsflansch 6a wie bei gezeigten Beispiel Teil des Ausrichtflanschs 19, alternativ ist er von diesem getrennt angeordnet.

In vorteilhaften Ausführungsformen weist die Ventilkartusche 5 wie beim gezeigten Beispiel einen die Ventileinlassöffnung 8 ringförmig umgebenden Dichtring 20 auf, der sich in Kartuschenumfangsrichtung um einen Bajonettdrehwinkelbereich D_{W} weiter als die Ventileinlassöffnung 8 erstreckt. Dadurch kann vermieden werden, dass der Dichtring 20 mit dem Rand der Einlasskanalausmündung 7 in Kontakt kommt bzw. sich an diesem entlang bewegt, wenn die Ventilkartusche 5 in der Aufnahmehülse 2 durch die Bajonettdrehbewegung gedreht wird.

Wie z.B. aus Fig. 12 erkennbar, liegt der Dichtring 20 bereits beim axialen Einschieben der Ventilkartusche 5 in die Aufnahmehülse 2 in der dazu vorgesehenen Drehlageposition der Ventilkartusche 5 bereits vollständig außerhalb der Einlasskanalausmündung 7, und er bleibt auch während der gesamten Bajonettdrehbewegung außerhalb der Einlasskanalausmündung 7 und deren Berandung. Dazu erstreckt er sich in Drehrichtung um den Bajonettdrehwinkelbereich D_{W} über die Ventileinlassöffnung 8 hinaus, die vor der Bajonettdrehbewegung um den Bajonettdrehwinkel gegenüber der Einlasskanalausmündung 7 versetzt liegt und durch die Bajonettdrehbewegung mit der Einlasskanalausmündung 7 in fluidverbindende Flucht gebracht wird. Etwaige scharfe Kanten am Rand der Einlasskanalausmündung 7 können daher bei der Montage der Ventilkartusche 5 in der Aufnahmehülse 2 nicht zu einer Beschädigung des Dichtrings 20 führen.

Zudem befinden sich in vorteilhaften Ausführungen der Dichtring 20 und die Einlasskanalausmündung 7 wie im gezeigten Beispiel im Bereich der jeweiligen Konusfläche 5a, 2a. Dadurch kann sich der Dichtring 20 mit seinem axial vorderen Abschnitt beim axialen Einschieben der Ventilkartusche 5 in die Aufnahmehülse 2 axial an der Einlasskanalausmündung 7 vorbeibewegen, ohne mit deren Randkante in Kontakt zu kommen bzw. gegen diese angedrückt zu sein. Das beugt etwaigen Beschädigungen des Dichtrings 20 vor.

In vorteilhaften Ausführungsformen weist die Ventilkartusche 5 wie beim gezeigten Beispiel am Außenumfang eine axiale Kabelführung 21 zum Führen mindestens eines elektrischen Anschlusskabels 22 von der ersten Stirnseite 10 zur zweiten Stirnseite 12 der Ventilkartusche 5 auf. Die erste Stirnseite 10 der Ventilkartusche 5 braucht daher für elektrische Anschlusszwecke nicht zugänglich bleiben, wenn die Ventilkartusche 5 in die Aufnahmehülse 2 eingefügt ist. Die Kabelführung 21 kann beispielsweise wie gezeigt eine Kabelklemmhalterung üblicher Art beinhalten, die am Außenumfang der Ventilkartusche 5 ausgebildet ist. Im gezeigten Beispiel ist die Kabelführung 21 bzw. die Klemmhalterung als Teil des Ausrichtflanschs 19 ausgebildet, in alternativen Ausführungen ist sie unabhängig vom Vorhandensein des Ausrichtflanschs 19 realisiert.

Im gezeigten Beispiel beinhaltet die Kabelführung 21 beispielsweise zwei Klemmhalteeinheiten 21a, 21b als Teil des Ausrichtflanschs 19, wobei die eine Klemmhalteeinheit 21a das gezeigte, von der elektrischen Ventilanschlusseinheit 11 an der ersten Stirnseite 10 der Ventilkartusche 5 abgehende Anschlusskabel 22 hält, während die andere Klemmhalteeinheit 21b zum Halten eines der Leitungsanschlussvorrichtung extern zugeführten elektrischen Kabels dient, das dann im leicht zugänglichen Bereich an der zweiten Stirnseite 12 der Ventilkartusche 5 mit dem gezeigten Anschlusskabel 22 des Ventils 4 elektrisch verbunden, z.B. zusammengesteckt, werden kann.

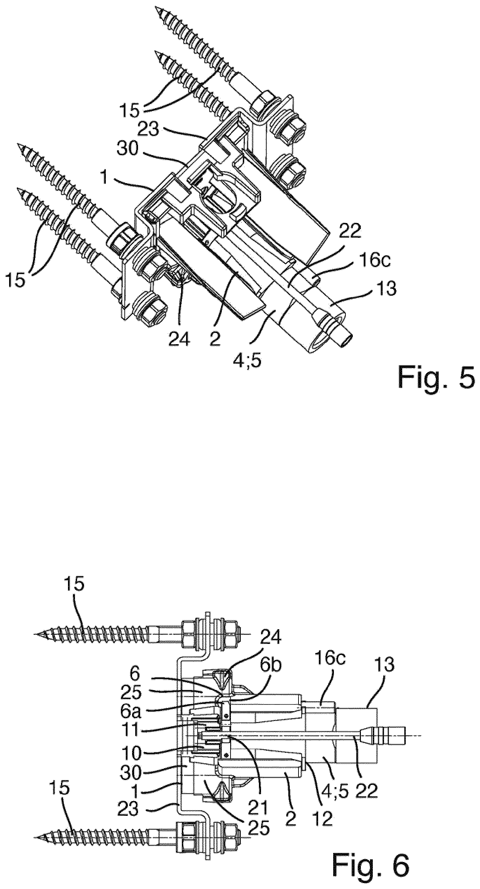

In entsprechenden Ausführungen weist der Grundkörper 1 eine wandmontierbare Grundplatte 23 und einen an der Grundplatte 23 befestigten Sockelkörper 24 auf, der die Aufnahmehülse 2, einen Wassereinlass 3a und den vom Wassereinlass 3a zur Einlasskanalausmündung 7 führenden Wassereinlasskanal 3 aufweist. Der Sockelkörper 24 kann beispielsweise geschraubt mit der Grundplatte 23 verbunden sein, wozu repräsentativ in Fig. 6 zugehörige Schraubverbindungslinien 25 gezeigt sind.

In entsprechenden Ausführungen ist wie im gezeigten Beispiel eine Längsrichtung L_{E} des Wassereinlasses 3 senkrecht zu einer Längsrichtung L_{H} der Aufnahmehülse 2 orientiert. Die Längsrichtung L_{H} der Aufnahmehülse 2 und damit auch der in ihr fixiert festgelegten Ventilkartusche 5 ist ihrerseits im gezeigten Ausführungsbeispiel senkrecht zur Grundplatte 23 orientiert, während die Wassereinlass-Längsrichtung L_{E} hierzu parallel orientiert ist.

In entsprechenden Ausführungen besitzt der Grundkörper 1 wie im gezeigten Beispiel eine Leerrohraufnahme 26 für ein Leerrohr 26a, das für die Zuführung einer oder mehrerer elektrischer Leitungen dient, beispielweise einer solchen zur elektrischen Ankopplung des Ventils 4 über dessen Anschlusskabel 22.

In entsprechenden Ausführungen bildet der Grundkörper 1 wie im gezeigten Beispiel eine Anschlussbox mit einem Boxgehäusedeckel 27. Der Boxgehäusedeckel 27 besitzt vorzugsweise eine Aussparung, durch die hindurch die Ventilkartusche 5 an ihrer zweiten Stirnseite 12 und folglich mit ihrer dortigen Rohrleitungsanschlusskupplung 13 zugänglich bleibt, so dass eine Rohrleitung, wie z.B. die Rohrleitung 14, an die Ventilkartusche 5 angekoppelt werden kann bzw. wieder von dieser abgekuppelt werden kann, ohne dass dafür zwingend der Boxgehäusedeckel 27 vom restlichen Grundkörper, z.B. der Grundplatte 23 mit dem darauf befestigten Sockelkörper 24, abgenommen werden muss.

Ein z.B. in Fig. 2 zu erkennender, vom Boxgehäusedeckel 27 abgedeckter Hohlraum 28 des Grundkörpers 1 kann beispielsweise als Stauraum bzw. zur Unterbringung nicht gezeigter elektrischer Kabel und/oder herkömmlicher elektrischer oder elektronischer Komponenten der sanitären Leitungsanschlussvorrichtung, wie Sensorik, Bluetooth-Module etc., je nach Bedarf genutzt werden.

Optional ist ein Dichtungskörper 30 einsetzbar, der für eine Fluiddichtheit des Grundkörpers 1 sorgt und gleichzeitig eine integrierte Schallentkopplung bereitstellen kann.

Der Dichtungskörper 30 kann sich dazu mit entsprechenden Abschnitten als flächige Trennung zwischen der Grundplatte 23 und dem Sockelkörper 24 erstrecken und/oder als flächige Platte die Grundplatte bedecken und/oder die Aufnahmehülse 2 umgeben und/oder wie gezeigt mit zwei Seitenflügeln 30a, 30b den Raum vor dem offenen Umfangsabschnitt der Aufnahmehülse 2 vom Raum dahinter abtrennen.

Wie die gezeigten und die weiteren oben erläuterten Ausführungsbeispiele deutlich machen, stellt die Erfindung in sehr vorteilhafter Weise eine wandmontierbare sanitäre Leitungsanschlussvorrichtung zur Verfügung, die eine große Flexibilität in der Anwendung besitzt, sich bei Bedarf kompakt bauen lässt, mit relativ geringem Aufwand gefertigt werden kann und sich in modernen Sanitärsystemen einschließlich Systemen mit Wassersteckdosen und Smart-Home-Systemen verwenden lässt.

## Patentansprüche

1. Wandmontierbare sanitäre Leitungsanschlussvorrichtung mit
- einem wandmontierbaren Grundkörper (1), der eine Aufnahmehülse (2) und einen Wassereinlasskanal (3) aufweist, der mit einer Einlasskanalausmündung (7) umfangsseitig in die Aufnahmehülse mündet,
- einem elektrisch ansteuerbaren Ventil (4) mit einer axial in die Aufnahmehülse einfügbaren, zylindrischen Ventilkartusche (5), in der sich eine Ventileinheit (9) befindet und die an einer ersten Stirnseite (10) eine elektrische Ventilanschlusseinheit (11) und an einer zweiten Stirnseite (12) eine Rohrleitungsanschlusskupplung (13) aufweist und eine umfangsseitige, fluiddicht an die Einlasskanalausmündung koppelbare Ventileinlassöffnung (8) beinhaltet, und
- einer Festlegungseinheit (6) zur fixierten Festlegung der Ventilkartusche in der Aufnahmehülse.

2. Wandmontierbare sanitäre Leitungsanschlussvorrichtung nach Anspruch 1, wobei die Festlegungseinheit eine Bajonettverbindungseinheit mit einem an der Ventilkartusche umfangsseitig radial abstehenden Bajonettverbindungsflansch (6a) und einer vom Bajonettverbindungsflansch hintergreifbaren Bajonettverbindungsschulter (6b) an der Aufnahmehülse aufweist.

3. Wandmontierbare sanitäre Leitungsanschlussvorrichtung nach Anspruch 2, wobei die Festlegungseinheit eine Bajonettverriegelung mit je einer axialen Teilumfangsbohrung (16a, 16b) am Innenumfang der Aufnahmehülse und am Außenumfang der Ventilkartusche sowie einem Drehsicherungsbolzen (16c) aufweist, wobei die beiden Teilumfangsbohrungen in einer Festlegeposition der Bajonettverbindungseinheit zur Bildung einer Vollbohrung fluchten, in die der Drehsicherungsbolzen einfügbar ist.

4. Wandmontierbare sanitäre Leitungsanschlussvorrichtung nach Anspruch 2 oder 3, wobei die Ventilkartusche einen die Ventileinlassöffnung ringförmig umgebenden Dichtring (20) aufweist, der sich in Kartuschenumfangsrichtung um einen Bajonettdrehwinkelbereich (D_{W}) weiter als die Ventileinlassöffnung erstreckt.

5. Wandmontierbare sanitäre Leitungsanschlussvorrichtung nach einem der Ansprüche 1 bis 4, wobei die Aufnahmehülse eine umfangsseitig über einen Freiwinkel (F_{W}) hinweg offene Hülsenform aufweist und die Ventilkartusche umfangsseitig einen sich über einen dem Freiwinkel entsprechenden Umfangswinkel (A_{W}) erstreckenden, radial abkragenden Ausrichtflansch (19) aufweist, der bei axial vollständig eingefügter Ventilkartusche axial außerhalb der Aufnahmehülse zu liegen kommt.

6. Wandmontierbare sanitäre Leitungsanschlussvorrichtung nach einem der Ansprüche 1 bis 5, wobei die Aufnahmehülse an ihrem Innenumfang und die Ventilkartusche an ihrem Außenumfang korrespondierende, sich in Kartuscheneinfügerichtung verengende Konusflächen (2a, 5a) aufweisen.

7. Wandmontierbare sanitäre Leitungsanschlussvorrichtung nach einem der Ansprüche 1 bis 6, wobei die Ventilkartusche an ihrer zweiten Stirnseite eine Drehwerkzeugaufnahme (17) aufweist.

8. Wandmontierbare sanitäre Leitungsanschlussvorrichtung nach einem der Ansprüche 1 bis 7, wobei die Ventilkartusche an ihrem Außenumfang eine axiale Kabelführung (21) zum Führen mindestens eines elektrischen Anschlusskabels von der ersten zur zweiten Stirnseite aufweist.

9. Wandmontierbare sanitäre Leitungsanschlussvorrichtung nach einem der Ansprüche 1 bis 8, wobei der Grundkörper eine wandmontierbare Grundplatte (23) und einen an der Grundplatte befestigten Sockelkörper (24) aufweist, der die Aufnahmehülse, einen Wassereinlass (3a) und den vom Wassereinlass zur Einlasskanalausmündung führenden Wassereinlasskanal aufweist.

10. Wandmontierbare sanitäre Leitungsanschlussvorrichtung nach Anspruch 9, wobei eine Längsrichtung (L_{E}) des Wassereinlasses senkrecht zu einer Längsrichtung (L_{H}) der Aufnahmehülse orientiert ist.

11. Wandmontierbare sanitäre Leitungsanschlussvorrichtung nach einem der Ansprüche 1 bis 10, wobei der Grundkörper eine Leerohraufnahme (26) für ein Leerrohr für eine elektrische Leitung aufweist.

12. Wandmontierbare sanitäre Leitungsanschlussvorrichtung nach einem der Ansprüche 1 bis 11, wobei der Grundkörper eine Anschlussbox mit einem Boxgehäusedeckel (27) bildet.

## Claims

1. Wall-mountable sanitary conduit connection device, comprising
- a wall-mountable base body (1) comprising an accommodation sleeve (2) and a water inlet duct (3) having an inlet duct outflow (7) leading into the accommodation sleeve on a peripheral side thereof,
- an electrically controllable valve (4) having a cylindrical valve cartridge (5) that is axially insertable into the accommodation sleeve, a valve unit (9) being located within the valve cartridge, wherein the valve cartridge comprises an electrical valve connection unit (11) on a first end face (10), a piping connection coupling (13) on a second end face (12), and a valve inlet opening (8) on a peripheral side capable of being coupled to the inlet duct outflow in a fluid-tight manner, and
- a fastening unit (6) for fixed fastening of the valve cartridge in the accommodation sleeve.

2. Wall-mountable sanitary conduit connection device according to claim 1, wherein the fastening unit comprises a bayonet connecting unit having a bayonet connecting flange (6a) projecting radially on the peripheral side of the valve cartridge and a bayonet connecting shoulder (6b) on the accommodation sleeve engageable from behind by the bayonet connecting flange.

3. Wall-mountable sanitary conduit connection device according to claim 2, wherein the fastening unit comprises a bayonet locking having an axial partly-peripheral bore (16a, 16b) on each of an interior circumference of the accommodation sleeve and an exterior circumference of the valve cartridge, and comprises an anti-rotation bolt (16c), wherein the two partly-peripheral bores are aligned in a fastening position of the bayonet connecting unit for providing a full bore into which the anti-rotation bolt is insertable.

4. Wall-mountable sanitary conduit connection device according to claim 2 or 3, wherein the valve cartridge includes a sealing ring (20) annularly surrounding the valve inlet opening, the sealing ring extending in cartridge peripheral direction by a bayonet rotational angle range (Dw) further than the valve inlet opening.

5. Wall-mountable sanitary conduit connection device according to any one of claims 1 to 4, wherein the accommodation sleeve has a sleeve shape that is open across a free angle (F_{W}) on the peripheral side, and the valve cartridge comprises an alignment flange (19) protruding radially and extending circumferentially across a circumferential angle (A_{W}) corresponding to the free angle, which flange comes to be located axially outside of the accommodation sleeve when the valve cartridge is axially completely inserted.

6. Wall-mountable sanitary conduit connection device according to any one of claims 1 to 5, wherein the accommodation sleeve on its interior circumference and the valve cartridge on its exterior circumference comprise corresponding cone surfaces (2a, 5a) tapering in cartridge insertion direction.

7. Wall-mountable sanitary conduit connection device according to any one of claims 1 to 6, wherein the valve cartridge has a turning tool accommodation (17) on the second end face thereof.

8. Wall-mountable sanitary conduit connection device according to any one of claims 1 to 7, wherein the valve cartridge on its exterior circumference comprises an axial cable guide (21) for guiding at least one electrical connection cable from the first to the second end face.

9. Wall-mountable sanitary conduit connection device according to any one of claims 1 to 8, wherein the base body comprises a wall-mountable base plate (23) and a socket body (24) fixed to the base plate, the socket body including the accommodation sleeve, a water inlet (3a), and the water inlet duct leading from the water inlet to the inlet duct outflow.

10. Wall-mountable sanitary conduit connection device according to claim 9, wherein a longitudinal direction (L_{E}) of the water inlet is oriented perpendicular to a longitudinal direction (L_{H}) of the accommodation sleeve.

11. Wall-mountable sanitary conduit connection device according to any one of claims 1 to 10, wherein the base body comprises an empty tube accommodation (26) for an empty tube for an electrical line.

12. Wall-mountable sanitary conduit connection device according to any one of claims 1 to 11, wherein the base body forms a connection box with a box-housing cover (27).

## Revendications

1. Dispositif sanitaire de raccordement de conduite apte au montage mural, comportant
- un corps de base (1) apte au montage mural et présentant un manchon de réception (2) et un canal d'admission d'eau (3) qui débouche par une embouchure de canal d'admission (7) dans le manchon de réception du côté périphérie,
- une vanne à commande électrique (4) comprenant une cartouche de vanne (5) cylindrique pouvant être insérée axialement dans le manchon de réception, dans laquelle se trouve une unité de vanne (9) et qui présente une unité de raccordement de vanne électrique (11) sur une première face frontale (10) et un accouplement de raccordement de tuyau (13) sur une deuxième face frontale (12) et qui comprend une ouverture d'admission de vanne (8) côté périphérie, qui peut être couplée de manière étanche aux fluides à l'embouchure de canal d'admission, et
- une unité d'immobilisation (6) pour l'immobilisation fixée de la cartouche de vanne dans le manchon de réception.

2. Dispositif sanitaire de raccordement de conduite apte au montage mural selon la revendication 1, dans lequel l'unité d'immobilisation comprend une unité de liaison à baïonnette avec une bride de liaison à baïonnette (6a) faisant saillie du côté périphérie radialement de la cartouche de vanne, et un épaulement de liaison à baïonnette (6b) sur le manchon de réception, qui peut être engagé par l'arrière par la bride de liaison à baïonnette.

3. Dispositif sanitaire de raccordement de conduite apte au montage mural selon la revendication 2, dans lequel l'unité d'immobilisation comprend un verrouillage à baïonnette ayant un alésage périphérique partiel axial (16a, 16b) à la périphérie intérieure du manchon de réception et à la périphérie extérieure de la cartouche de vanne, respectivement, et un boulon de blocage anti-rotation (16c), les deux alésages périphériques partiels étant alignés dans une position d'immobilisation de l'unité de liaison à baïonnette pour former un alésage débouchant dans lequel le boulon de blocage anti-rotation peut être inséré.

4. Dispositif sanitaire de raccordement de conduite apte au montage mural selon la revendication 2 ou 3, dans lequel la cartouche de vanne présente une bague d'étanchéité (20) qui entoure de manière annulaire l'ouverture d'admission de vanne et qui, dans la direction périphérique de la cartouche, s'étend plus loin d'une plage d'angle de rotation de baïonnette (D_{W}) que l'ouverture d'admission de vanne.

5. Dispositif sanitaire de raccordement de conduite apte au montage mural selon l'une des revendications 1 à 4, dans lequel le manchon de réception présente une forme de manchon ouverte du côté périphérie sur un angle de dépouille (F_{W}), et la cartouche de vanne présente du côté périphérie une bride d'alignement (19) qui fait saillie radialement et qui s'étend sur un angle périphérique (A_{W}) correspondant à l'angle de dépouille, laquelle bride vient se placer axialement à l'extérieur du manchon de réception lorsque la cartouche de vanne est entièrement insérée axialement.

6. Dispositif sanitaire de raccordement de conduite apte au montage mural selon l'une des revendications 1 à 5, dans lequel le manchon de réception, à sa périphérie intérieure, et la cartouche de vanne, à sa périphérie extérieure, présentent des surfaces coniques correspondantes (2a, 5a) qui se rétrécissent dans la direction d'insertion de la cartouche.

7. Dispositif sanitaire de raccordement de conduite apte au montage mural selon l'une des revendications 1 à 6, dans lequel la cartouche de vanne comporte un logement pour outil rotatif (17) sur sa deuxième face frontale.

8. Dispositif sanitaire de raccordement de conduite apte au montage mural selon l'une des revendications 1 à 7, dans lequel la cartouche de vanne comprend à sa périphérie extérieure un guide-câble axial (21) pour guider au moins un câble de connexion électrique de la première à la deuxième face frontale.

9. Dispositif sanitaire de raccordement de conduite apte au montage mural selon l'une des revendications 1 à 8, dans lequel le corps de base comprend une plaque de base (23) apte au montage mural et un corps de socle (24) qui est fixé à la plaque de base et qui comprend le manchon de réception, une entrée d'eau (3a) et le canal d'admission d'eau menant de l'entrée d'eau à l'embouchure de canal d'admission.

10. Dispositif sanitaire de raccordement de conduite apte au montage mural selon la revendication 9, dans lequel une direction longitudinale (L_{E}) de l'entrée d'eau est orientée perpendiculairement à une direction longitudinale (L_{H}) du manchon de réception.

11. Dispositif sanitaire de raccordement de conduite apte au montage mural selon l'une des revendications 1 à 10, dans lequel le corps de base comprend un logement pour gaine (26) destiné à une gaine d'une ligne électrique.

12. Dispositif sanitaire de raccordement de conduite apte au montage mural selon l'une des revendications 1 à 11, dans lequel le corps de base constitue une boîte de raccordement ayant un couvercle de boîte (27).
